# EUROPÄISCHE PATENTSCHRIFT

(11) **EP 3 020 512 B1**
(45) Veröffentlichungstag und Bekanntmachung des Hinweises auf die Patenterteilung: **23.02.2022**
(21) Anmeldenummer: 15188677.7
(22) Anmeldetag: 07.10.2015
(51) Int. Cl.: B25F 5/00

(54) **WERKZEUG UND VERFAHREN ZUR BEHANDLUNG EINES WERKSTÜCKS MIT EINEM WERKZEUGELEMENT EINES WERKZEUGS**
TOOL AND METHOD FOR TREATING A WORKPIECE WITH A TOOL ELEMENT OF A TOOL
OUTIL ET PROCEDE DE TRAITEMENT D'UNE PIECE AYANT UN ELEMENT D'OUTIL

(30) Priorität: 12.11.2014 DE 102014223036
(43) Veröffentlichungstag der Anmeldung: 18.05.2016
(73) Patentinhaber: Robert Bosch GmbH, 70442 Stuttgart (DE)
(72) Erfinder: Scharfenberg, Andreas, 71540 Murrhardt (DE); Schneider, Joerg, 74427 Fichtenberg (DE)

(56) Entgegenhaltungen:
- DE-A1-102010 034 151
- DE-U1-202006 016 830
- JP-A- 2010 058 217

## Beschreibung

Die vorliegende Erfindung bezieht sich auf ein Werkzeug und ein Verfahren zur Behandlung eines Werkstücks mit einem Werkzeugelement eines Werkzeugs.

In Fertigungsanlagen, wie Fertigungsstraßen für Fahrzeuge, wie Kraftfahrzeuge, Flugzeuge, usw., Einrichtungsgegenstände usw., werden oft Werkzeuge eingesetzt, welche Werkstücke behandeln. Solche Werkzeuge sind beispielsweise Nietwerkzeuge oder Schraubwerkzeuge oder Bohrwerkzeuge, Stanzwerkzeuge, usw. Ein solches Werkzeug verbindet dabei beispielsweise zwei Enden eines Werkstücks oder zwei oder mehr Werkstücke miteinander mit einem Niet oder einer Schraube. Oder mit dem Werkzeug wird eine Öffnung in das Werkstück gebohrt oder gestanzt.

DE 10 2010 034 151 A1 zeigt ein System zur Ermittlung der Position und/oder der Lage eines an einer Werkzeugaufnahme geführten Werkzeugs in einem Raum. DE 20 2006 016 830 U1 offenbart ein Werkzeug zum Bearbeiten von Werkstücken, bei welchem zur Qualitätsüberwachung festgestellt wird, wann sich das Werkzeug an welcher Position befindet. JP 2010 058217 A zeigt ein Werkzeug, das zum Eindrehen einer Schraube in ein Werkstück gestartet werden kann, wenn eine von einem externen Computer erfasste Schrägstellung zwischen einem drehbaren Teil des Werkzeugs und einer Eindrehöffnung für die Schraube in einem Werkstück nicht zu groß ist. JP 2010 058217 A zeigt auch: ein Werkzeug, mit einem Werkzeugelement zur Behandlung eines Werkstücks, einer Erfassungseinrichtung zur Erfassung der Lage des Werkzeugs und/oder des Werkzeugelements im Raum relativ zu einer Oberfläche des Werkstücks und zu einer Achse einer Schraube oder eines Niets, und einer Steuereinrichtung, die zur Auswertung des von der Erfassungseinrichtung erfassten Werts relativ zu der Oberfläche des Werkstücks und zu der Achse der Schraube oder des Niets ausgestaltet ist, und die zur Steuerung des Werkzeugs abhängig davon, ob das Ergebnis der Auswertung in einem vorbestimmten Toleranzbereich um einen vorbestimmten Wert liegt, ausgestaltet ist, wobei die Steuereinrichtung ausgestaltet ist, den Start einer Behandlung des Werkstücks mit dem Werkzeugelement zu ermöglichen, wenn das Ergebnis der Auswertung in dem vorbestimmten Toleranzbereich liegt, und/oder wenn eine bekannte Fehlstellung des Werkzeugelements zu der Schraube oder dem Niet vorliegt.

Bei der Serienproduktion in den Fertigungsanlagen wird zum einen ein Vorgang häufig wiederkehrend ausgeführt, oft bei jedem der zu produzierenden Gegenstände. Zudem ist es zur Qualitätssicherung hierbei erforderlich, dass die Behandlung der Werkstücke mit den Werkzeugen auf eine vorbestimmte Art und Weise ausgeführt wird.

Somit sind derzeit beispielsweise Blindnietsetzgeräte als Nietwerkzeug im Einsatz, bei welchen die Mindestanpresskraft des Nietgeräts ermittelt wird. Jedoch kommt es trotzdem weiter vor, dass Nietverbindungen von der Steuereinrichtung des Werkzeugs als in Ordnung bewertet werden, obwohl die Nietverbindung nicht die geforderten Qualitätsanforderungen erfüllt.

In Bezug auf das Eindrehen von Schrauben sind Schraubwerkzeuge im Einsatz, bei welchen das Drehmoment und der Drehwinkelverlauf gemessen werden, um das Schraubwerkzeug beim Ende des Schraubvorgangs abzuschalten. Damit soll erreicht werden, dass die Schraube mit einer vorgegebenen Anzugskraft eingeschraubt ist. Jedoch ist es auch trotz einer solchen Qualitätssicherung nicht sicher, dass die hergestellte Schraubverbindung tatsächlich die dann erwartete Qualität erfüllt.

Daher ist es Aufgabe der vorliegenden Erfindung, ein Werkzeug und ein Verfahren zur Behandlung eines Werkstücks mit einem Werkzeugelement eines Werkzeugs bereitzustellen, mit welchen die zuvor genannten Probleme gelöst werden können. Insbesondere sollen ein Werkzeug und ein Verfahren zur Behandlung eines Werkstücks mit einem Werkzeugelement eines Werkzeugs bereitgestellt werden, bei welchen die vorgegebenen Qualitätsanforderungen sicher erfüllt werden können.

Diese Aufgabe wird durch ein Werkzeug nach Patentanspruch 1 gelöst. Das Werkzeug umfasst ein Werkzeugelement zur Behandlung eines Werkstücks, eine Erfassungseinrichtung zur Erfassung der Lage des Werkzeugs und/oder des Werkzeugelements im Raum, eine Steuereinrichtung zur Auswertung des von der Erfassungseinrichtung erfassten Werts und zur Steuerung des Werkzeugs abhängig davon, ob das Ergebnis der Auswertung in einem vorbestimmten Toleranzbereich um einen vorbestimmten Wert liegt, wie in Anspruch 1 angegeben.

Mit dem Werkzeug ist es möglich, eine Schrägstellung des Werkzeugs und/oder des Werkzeugelements zu detektieren um dann passende Strategien zu fahren. Es werden also zulässige Schwellwerte oder ein Toleranzbereich bei der Ausrichtung des Werkzeugs im Raum berücksichtigt. Dadurch kann sichergestellt werden, dass auch die erwartete Qualität der Behandlung des Werkzeugs gewährleistet wird. Das Werkzeug ermöglicht somit, die Qualität einer Behandlung eines Werkstücks mit dem Werkzeug deutlich zu verbessern. Beispielsweise kann bei einer Vernietung von Werkstücken mit einem Blindniet auch die Stellung des Niets und des Blindnietsetzgeräts als Werkzeug von unmittelbar vor dem Start der Vernietung bis zum Abbruch des Nietdorns überprüft werden. Bei einem Schraubwerkzeug kann die Achsparallelität bzw. das Fluchten des Schraubwerkzeugs und/oder des Schraubelements des Schraubwerkzeugs mit der Achse der zu verschraubenden Schraube geprüft werden. Ähnliches gilt für ein Bohrwerkzeug und sein Bohrelement gegenüber einem Werkstück.

Vorteilhafte weitere Ausgestaltungen des Werkzeugs sind in den abhängigen Patentansprüchen angegeben.

Bei dem Werkzeug kann die Steuerung des Werkzeugs abhängig von dem Ergebnis der Auswertung eine Startbedingung für eine Behandlung des Werkstücks mit dem Werkzeugelement sein, und/oder die Steuerung des Werkzeugs kann abhängig von dem Ergebnis der Auswertung eine Bewertung umfassen, ob eine mit dem Werkzeugelement durchgeführte Behandlung eines Werkstücks in Ordnung war oder nicht.

Zudem ist es denkbar, dass die Erfassungseinrichtung zur Erfassung der Beschleunigung und/oder der Position des Werkzeugs und/oder des Werkzeugelements im Raum ausgestaltet ist.

Die Erfassungseinrichtung kann auch einen Beschleunigungssensor und/oder einen Gyrosensor aufweisen.

Möglicherweise umfasst das Werkzeug eine Anzeigeeinrichtung zur Anzeige der von der Erfassungseinrichtung erfassten Werte und/oder von Warnungen, wenn eine mit dem Werkzeugelement durchgeführte Behandlung eines Werkstücks nicht in Ordnung war.

In einer Ausgestaltung können im Werkzeug gespeicherte Werte zum Teachen des Werkzeugs zum Anfahren von mindestens einer vorbestimmten Position vorgesehen sein, wobei die Steuereinrichtung zur Steuerung des Werkzeugs derart ausgestaltet ist, dass das Werkzeug mindestens eine vorbestimmte Position zum Behandeln des Werkstücks anfährt.

Das Werkzeug kann ein Nietwerkzeug oder ein Schraubwerkzeug oder ein Bohrwerkzeug oder ein Stanzwerkzeug sein.

Das Werkzeug kann Teil einer Fertigungsanlage zur Fertigung von Gegenständen aus mindestens einem Werkstück sein, wobei das Werkzeug zur Behandlung des Werkstücks zum Einsatz kommt.

Die Aufgabe wird zudem durch ein Verfahren zur Behandlung eines Werkstücks mit einem Werkzeugelement eines Werkzeugs nach Patentanspruch 10 gelöst. Das Verfahren hat die Schritte: Erfassen, mit einer Erfassungseinrichtung des Werkzeugs, der Lage des Werkzeugs und/oder des Werkzeugelements im Raum, Auswerten, mit einer Steuereinrichtung des Werkzeugs, des von der Erfassungseinrichtung erfassten Werts, und Steuern, mit der Steuereinrichtung des Werkzeugs, abhängig davon, ob das Ergebnis der Auswertung in einem vorbestimmten Toleranzbereich um einen vorbestimmten Wert liegt, wie in Anspruch 8 angegeben.

Das Verfahren erzielt die gleichen Vorteile, wie sie zuvor in Bezug auf das Werkzeug genannt sind.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Fertigungsanlage mit einem Werkzeugs gemäß einem ersten Ausführungsbeispiel;
Fig. 2 ein Flussdiagramm zur Darstellung eines Verfahrens zur Behandlung eines Werkstücks mit einem Werkzeugelement eines Werkzeugs gemäß dem ersten Ausführungsbeispiel;
Fig. 3 ein Blockschaltbild eines Werkzeugs gemäß einem zweiten Ausführungsbeispiel; und
Fig. 4 ein Flussdiagramm zur Darstellung eines Verfahrens zur Behandlung eines Werkstücks mit einem Werkzeugelement eines Werkzeugs gemäß dem zweiten Ausführungsbeispiel.

In den Figuren sind gleiche oder funktionsgleiche Elemente, sofern nichts anderes angegeben ist, mit denselben Bezugszeichen versehen.

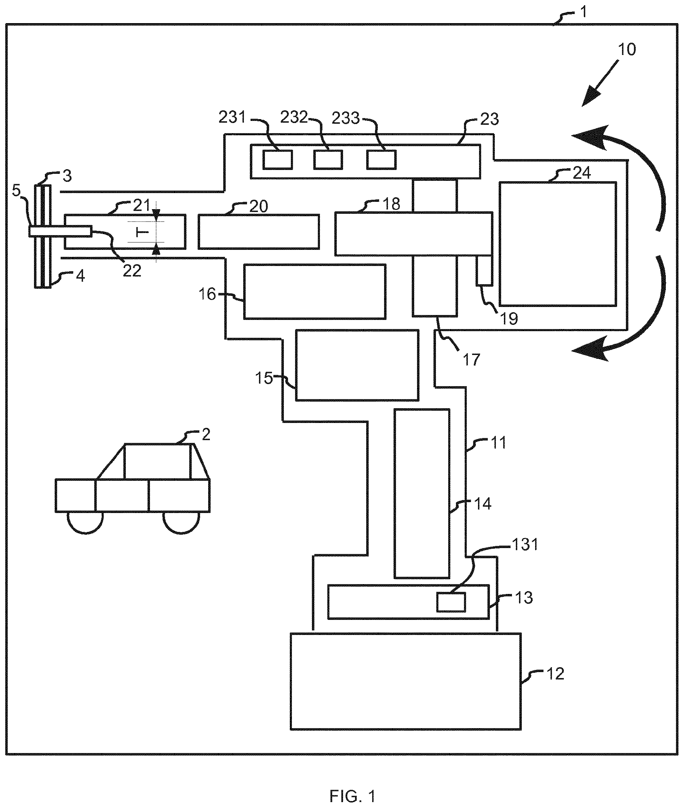

Fig. 1 zeigt sehr schematisch eine Fertigungsanlage 1 zur Fertigung von Gegenständen 2, wobei ein Werkzeug 10 zum Behandeln von Werkstücken 3, 4 beispielsweise zum Setzen von Nieten 5, insbesondere Blindnieten, eingesetzt wird. Die Werkstücke 3, 4 können beispielsweise Karosserieteile eines Fahrzeugs als Gegenstand 2 sein, wobei die Werkstücke 3, 4 mit den Nieten 5 verbunden werden. Hierbei kann das Werkzeug 10 beispielsweise zwei Enden des Werkstücks 2 verbinden oder die Werkstücke 3, 4 oder noch weitere nicht dargestellte Werkstücke miteinander mit einem Niet 5 verbinden. Das Werkzeug 10 ist bei diesem Beispiel also ein Nietwerkzeug und insbesondere ein Blindnietsetzgerät. Das Werkzeug 10 kann jedoch auch ein Schraubwerkzeug und/oder ein Bohrwerkzeug oder ein Stanzwerkzeug sein.

Das Werkzeug 10 hat ein Gehäuse 11, eine Stromversorgung 12, eine Stromversorgungsschnittstelle 13 mit Leistungselektronik 131, einen Kabelbaum 14, einen Ein-/Ausschalter 15, einen Motor 16, ein Getriebe 17, insbesondere mit Versatz, eine Trapez- oder Kugelumlaufspindel 18 mit Nietdorndurchführung, einen Wegesensor 19, einen Kraftsensor 20 mit Nietdorndurchführung, ein Mundstück 21 zum Halten eines Werkzeugelements 22, eine Steuereinrichtung 23 und einen Nietdornbehälter 24. Die Steuereinrichtung 23 hat ein Kommunikationsmodul 231, eine Anzeigeeinrichtung 232, wie beispielsweise ein Display, und eine Erfassungseinrichtung 233. Die Steuereinrichtung 23 kann Steuerelektronik umfassen.

Bei dem Werkzeug 10 kann die Stromversorgung 12 über ein Netzteil oder mittels einer Batterie, insbesondere einer nicht wieder aufladbaren oder wieder aufladbaren Batterie (Akkumulator) realisiert sein. Das Werkzeugelement 22 ist bei dem Werkzeug 20 als Beispiel ein Nietdorn zum Setzen der Nieten 5.

Das Werkzeug 10 ist bei dem vorliegenden Ausführungsbeispiel als qualitätsbewertendes Bindnietsetzgerät ausgestaltet. Demzufolge sammelt das Werkzeug 10 mit dem Wegesensor 19 und/oder dem Kraftsensor 20 und/oder der Erfassungseinrichtung 233 Daten über die Qualität der gesetzten Nieten 5, insbesondere Blindnieten, und kann bewerten, ob die Qualität der gesetzten Nieten 5 ein zuvor festgelegtes Kriterium erfüllt oder nicht. Dadurch kann das Werkzeug 10 in der Regel in einer Serienmontage oder Serienproduktion von beispielsweise Fahrzeugen in der Fertigungsanlage 1 eingesetzt werden, da in der Serienproduktion von Fahrzeugen eine Dokumentation von Fertigungsdetails bei eventuellen späteren Unfällen des Fahrzeugs von einer Versicherung ausgewertet werden.

Wie bereits zuvor beschrieben, können mit dem Werkzeug 10 insbesondere Karosserieteile der Fahrzeuge als Gegenstände 2 mit dem Werkzeug 10 vernietet werden. In der Serienproduktion der Fahrzeuge als Gegenstände 2 ist jeder Nietfall bekannt. Ein Nietfall ist z.B. jede Vernietung innerhalb einer Karosserie eines Fahrzeugs und ist eine Behandlung eines Werkstücks 3, 4 mit dem Werkzeug 10.

Mit dem Werkzeug 10 kann für jede Behandlung eines Werkstücks 3, 4 eine Grenze oder ein Toleranzbereich T um einen Idealwert, den vorbestimmten Wert, für einzuhaltende Werte ermittelt und eingestellt werden. Es können mit dem Werkzeug 10 also beispielsweise für jeden Nietfall eine Grenze für z.B. Auslösekraft, Nietkraft, Nietweg ermittelt und eingestellt werden. Die sich ergebenden Grenzen können Voraussetzungen für den Start des Nietvorgangs mit dem Werkzeug oder auch für die Gut- oder Schlechtbewertung des Nietvorgangs sein, also ob der mit dem Werkzeug 10 durchgeführte Nietvorgang (Behandlung des Werkstücks 3 und/oder 4) in Ordnung war oder nicht.

Demzufolge kann das Werkzeug 10 bei der Serienproduktion beispielsweise nur für genau einen Nietfall, also eine Behandlung eines Werkstücks 3 und/oder 4, eingesetzt werden. Es ist jedoch auch möglich, dass das Werkzeug 10 so programmierbar ist, dass es für jeden Nietfall, also eine Behandlung eines Werkstücks 3 und/oder 4, eigene Kriterien zur Qualitätsbeurteilung hat.

Die Qualität einer Vernietung mit einem Blindniet hängt u.a. von der Stellung des Niets 5 und des Werkzeug 10 von unmittelbar vor dem Start der Vernietung bis zum Abbruch des Nietdorns als Werkzeugelement 22 ab. Die Erfassungseinrichtung 233 ermöglicht es, eine Schrägstellung des Werkzeugs 10 im Raum zu erfassen um dann passende Strategien zu fahren. Hierfür hat die Erfassungseinrichtung 233 einen Beschleunigungssensor und gegebenenfalls einen Gyrosensor. Die Steuereinrichtung 23 des Werkzeugs 10 kann dann auf der Grundlage der von der Erfassungseinrichtung 233 gelieferten Daten mit Hilfe der Erdbeschleunigung jederzeit die Lage des Werkzeugs 10 im Raum ermitteln.

Je nach einer mit der Erfassungseinrichtung 233 erfassten Schrägstellung des Werkzeugs 10 können die nachfolgenden Strategien zum Einsatz kommen.

Eine Strategie kann sein, dass eine Behandlung mit dem Werkzeug 10, also ein Nietvorgang, nur bei einer passenden Lage des Werkzeugs 10 gestartet werden kann. Eine weitere Strategie kann sein, dass eine Behandlung mit dem Werkzeug 10, also ein Nietvorgang, zwar auch bei einer nicht passenden Lage des Werkzeugs 10 gestartet werden kann, jedoch eine nachträgliche Schlechtbewertung der Vernietung als Ergebnis des Nietvorgangs erfolgt.

Für den durchzuführenden Nietfall als Behandlung des Werkstücks 3 und/oder 4 wird das Werkzeug 10 initial mit seiner Lage im Raum pro Nietfall geteacht. Mit Hilfe der Erfassungseinrichtung 233 kennt das Werkzeug 10 seine ideale Lage im Raum für jeden einzelnen Nietfall. Bei der idealen Lage ist das Werkzeug 10 und der Niet 5 senkrecht zur Oberfläche des Werkstücks 3, 4 ausgerichtet. Von dieser idealen Lage kann um eine vorbestimmte Abweichung abgewichen werden. Die vorbestimmte Abweichung kann z.B. +/-5° sein, so dass die ideale Lage mit einer Toleranz von z.B. +/- 5° ergänzt ist. Somit ist um die ideale Lage ein Toleranzbereich T vorhanden, der einen unteren und oberen Schwellwert für die Möglichkeit des Startens des Nietvorgangs bzw. einer Gutbewertung des Nietvorgangs hat.

Befindet sich das Werkzeug 10 bei diesem Beispiel also in dem vorbestimmten Toleranzbereich T, beispielsweise ein Bereich um +/- 5° oder +4° und -6° um die senkrechte Lage zur Oberfläche des Werkstücks 3, 4, kann der Nietvorgang gestartet werden bzw. wird der Nietvorgang, für den Fall, dass auch die Erfassungsergebnisse des Wegesensors 19 und des Kraftsensor 20 in Ordnung sind, als Gut bzw. in Ordnung bewertet. Andernfalls, also wenn sich das Werkzeug 10 bei diesem Beispiel außerhalb des vorbestimmten Toleranzbereichs T befindet, wird ein Starten des Nietvorgangs verhindert oder, falls der Nietvorgang dennoch gestartet werden kann, wird der Nietvorgang als Schlecht bzw. nicht in Ordnung bewertet. Diese Schlechtbewertung erfolgt unabhängig von den Erfassungsergebnissen des Wegesensors 19 und des Kraftsensor 20.

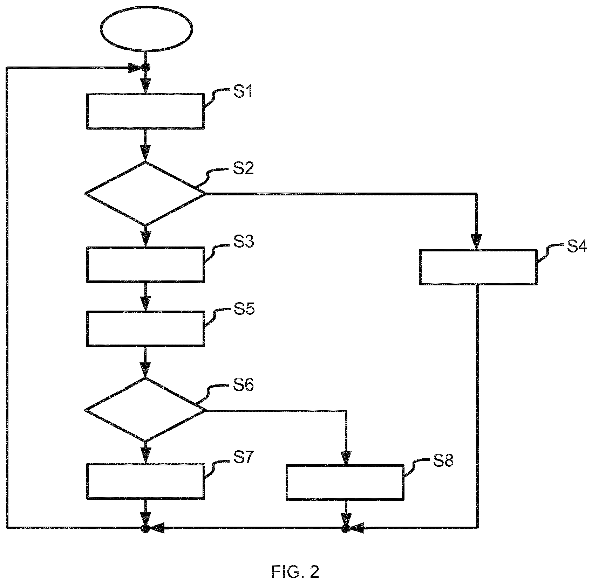

Somit kann mit dem Werkzeug 10, genauer gesagt seiner Steuereinrichtung 23 und der Erfassungseinrichtung 233 das in Fig. 2 veranschaulichte Verfahren ausgeführt werden.

Bei einem Schritt S1 wird mit der Erfassungseinrichtung 233 die Lage des Werkzeugs 10 im Raum erfasst. Danach geht der Fluss zu einem Schritt S2 weiter, bei welchem geprüft wird, ob das Werkzeug 10 in der idealen Lage, gegebenenfalls ergänzt um den vorbestimmten Toleranzbereich T, zur Behandlung des Werkstücks 3, 4 angeordnet ist oder nicht. Es wird somit geprüft, ob die Lage des Werkzeugs 10 einem vorbestimmten Wert im Toleranzbereich T entspricht. Ist das Werkzeug 10 in der idealen Lage, gegebenenfalls ergänzt um den vorbestimmten Toleranzbereich T, angeordnet, geht der Fluss zu einem Schritt S3 weiter. Andernfalls geht der Fluss zu einem Schritt S4 weiter.

Bei dem Schritt S3 kann mit dem Werkzeug 10 die Behandlung des Werkstücks 3 und/oder 4 gestartet werden. Danach geht der Fluss zu einem Schritt S5 weiter.

Demgegenüber wird bei dem Schritt S4 die Behandlung des Werkstücks 3 und/oder 4 mit dem Werkzeug 10 verhindert, so dass der Nietvorgang nicht gestartet werden kann. Danach geht der Fluss zu dem Schritt S1 zurück.

Bei dem Schritt S5 wird mit dem Werkzeug 10 die Behandlung des Werkstücks 3 und/oder 4 durchgeführt. Hierbei erfasst der Wegesensors 19 den/die bei der Behandlung des Werkstücks 3 und/oder 4 zurückgelegten Weg(e) und/oder der Kraftsensor 20 erfasst die bei der Behandlung des Werkstücks 3 und/oder 4 ausgeübten oder aufgetretenen Kraft/Kräfte. Danach geht der Fluss zu einem Schritt S6 weiter.

Bei dem Schritt S6 wird geprüft, ob die von dem Wegesensor 19 und/oder dem Kraftsensor 20 erfassten Werte innerhalb der vorgegebenen Grenzen liegen oder nicht. Liegen die Werte innerhalb der vorgegebenen Grenzen, geht der Fluss zu einem Schritt S7 weiter, bei welchem die Behandlung des Werkstücks 3 und/oder 4 mit dem Werkzeug 10 als "Gut" bzw. "in Ordnung" bewertet wird. Das Ergebnis der Bewertung kann beispielsweise mit Hilfe des Kommunikationsmoduls 231 an eine übergeordnete Stelle, beispielsweise eine Steuereinrichtung der Fertigungsanlage 1, ein mobiles Bediengerät, usw. geleitet und/oder mit der Anzeigeeinrichtung 232 angezeigt werden.

Andernfalls, also wenn einer der Werte außerhalb der vorgegebenen Grenzen liegt, geht der Fluss zu einem Schritt S8 weiter, bei welchem die Behandlung des Werkstücks 3 und/oder 4 mit dem Werkzeug 10 als "Schlecht" bzw. "nicht in Ordnung" bewertet wird. Auch dieses Ergebnis der Bewertung kann beispielsweise mit Hilfe des Kommunikationsmoduls 231 an eine übergeordnete Stelle, beispielsweise eine Steuereinrichtung der Fertigungsanlage 1, ein mobiles Bediengerät, usw. geleitet und/oder mit der Anzeigeeinrichtung 232 angezeigt werden. Danach geht der Fluss zu dem Schritt S1 zurück.

Das Verfahren wird beendet, wenn das Werkzeug 10 ausgeschaltet wird.

Gemäß einer Modifikation des ersten Ausführungsbeispiels ermöglicht die Erfassungseinrichtung 233 mit ihrem Beschleunigungssensor unzulässige Betriebszustände, z.B. Sturz des Werkzeugs 10, Schlag am Werkzeug 10, usw., zu ermitteln. Die dabei ermittelten Daten können mit Hilfe des Kommunikationsmoduls 231 an eine übergeordnete Stelle, beispielsweise eine Steuereinrichtung der Fertigungsanlage 1, ein mobiles Bediengerät, usw. geleitet und/oder mit der Anzeigeeinrichtung 232 angezeigt und/oder im Gewährleistungsfall herangezogen werden.

Gemäß einer weiteren Modifikation des ersten Ausführungsbeispiels stellt eine Kombination aus Beschleunigungssensor und Gyrosensor nicht nur die Ermittlung der Lage des Werkzeugs 10 im Raum sondern auch die Position des Werkzeugs 10 im Raum bereit. In diesem Fall erhält das Werkzeug 10 durch Teachen eine Ausgangsposition und Lage im Raum, auf die es eingestellt wird. Von dieser Position und Lage aus kann das Werkzeug 10 über ermittelte Beschleunigungs- und Drehwerte über der Zeit jederzeit seine neue Lage und Position ermitteln und dann später für eine Behandlung des Werkstücks 3 und/oder 4, also für einen Nietvorgang, anfahren. Bei dieser Ausgestaltung kann bei dem Werkzeug 10 dann nur in vorgegebenen Lagen und Positionen z.B. der Nietvorgang freigegeben werden.

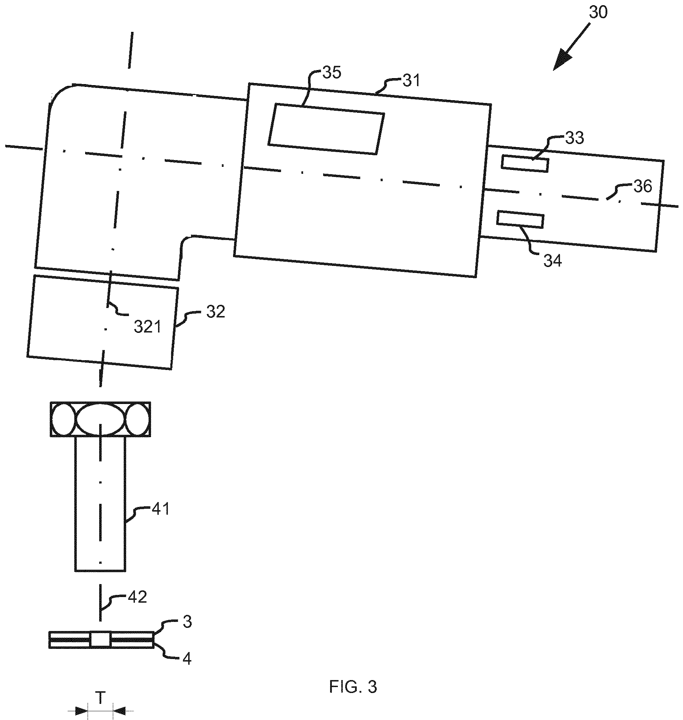

Fig. 3 zeigt ein Werkzeug 30 gemäß einem zweiten Ausführungsbeispiel. Das Werkzeug 30 ist bei diesem Beispiel ein Schraubwerkzeug und insbesondere ein Handschraubwerkzeug. Somit dient das Werkzeug 30 zum Eindrehen einer Schraube in ein oder mehrere Werkstücke 3, 4. Das Werkzeug 30 kann jedoch auch ein Nietwerkzeug oder ein Bohrwerkzeug oder ein Stanzwerkzeug sein. Zudem kann das Werkzeug 30 ein Netzteil für eine kabelgebundene Stromversorgung oder eine Batterie für eine kabellose Ausführung des Werkzeugs 30 aufweisen. Die Batterie kann wieder aufladbar oder nicht wieder aufladbar sein. Somit ist das Werkzeug 30 ein kabelgebundenes oder ein batteriebetriebenes Werkzeug. Das Werkzeug 30 kann ebenfalls bei einer Fertigungsanlage 1 zur Fertigung von Gegenständen 2 gemäß dem ersten Ausführungsbeispiel Verwendung finden.

Das Werkzeug 30 hat ein Gehäuse 31, ein Werkzeugelement 32, eine Erfassungseinrichtung 33, eine Steuereinrichtung 34, eine Anzeigeeinrichtung 35 und einer Werkzeugachse 36. In dem Werkzeugelement 32 kann ein Schraubenkopf 41 der Schraube aufgenommen werden, so dass ein Schraubvorgang bzw. eine Verschraubung startbar ist. Das Werkzeugelement 32 hat eine Achse 321. Die Achse 321 und die Werkzeugachse 36 sind bei dem Werkzeug 30 in etwa senkrecht zueinander angeordnet.

Die Qualität einer mit dem Werkzeug 30 ausgeführten Verschraubung hängt unter anderem auch von der Achsparallelität der Achse 321 des Werkzeugelements 32 zur Schraubachse 42 ab. Genauer gesagt, die Qualität einer Schraubverbindung hängt unter anderem davon ab, dass die Abtriebsachse des Werkzeugs 30, also die Achse 321, möglichst fluchtend zumindest aber im Toleranzbereich T zur Eindrehachse der Schraube am Werkstück 3, 4 ausgerichtet ist. In Fig. 3 ist die Eindrehachse der Schraube genau senkrecht zu den Werkstücken 3, 4 angeordnet. Bei einem Verkanten mit dem Werkzeugelement 32 auf der Schraube, genauer gesagt am Schraubenkopf 41, liegen die Achse 321 und die Schraubenachse 42 nicht aufeinander im Raum, wie in Fig. 3 gezeigt. Ein solches Verkanten führt zu einem welligen Drehmoment und Drehwinkelverlauf und somit zu einer reduzierten Genauigkeit in der Abschaltung auf die Zielwerte, welche am Ende des Schraubvorgangs mit dem Werkzeug 30 zu erreichen sind.

Daher ermöglicht es die Erfassungseinrichtung 33 eine Schrägstellung des Werkzeugs 30 bzw. der Achse 321 des Werkzeugelements 32 im Raum oder zu der Schraubenachse 42 zu erfassen, um dann passende Strategien zu fahren. Somit kann die Erfassungseinrichtung 33 auch die Lage des Werkzeugs 30 und/oder des Werkzeugelements 32 relativ zur Oberfläche des Werkstücks 3, 4 erfassen. Für diese Aufgaben hat die Erfassungseinrichtung 33 einen Beschleunigungssensor und gegebenenfalls einen Gyrosensor. Die Steuerungseinrichtung 34 des Werkzeugs 30 kann dann auf der Grundlage der von der Erfassungseinrichtung 33 gelieferten Daten mit Hilfe der Erdbeschleunigung jederzeit die Lage des Werkzeugs 30 im Raum ermitteln.

Je nach einer mit der Erfassungseinrichtung 33 erfassten Schrägstellung des Werkzeugs 30 können die nachfolgenden Strategien zum Einsatz kommen.

Eine Strategie könnte sein, dass eine Behandlung mit dem Werkzeug 30, also ein Schraubvorgang, nur bei passender Lage des Werkzeugelements 32 zu der Schraube gestartet werden kann. Eine andere Strategie kann sein, dass die Fehlstellung des Werkzeugelements 32 zu der Schraube bekannt ist und dann mit der Steuereinrichtung 34 softwaretechnisch kompensiert wird, so dass eine Behandlung mit dem Werkzeug 30, also ein Schraubvorgang gestartet werden kann. Die Werte über die Schraubvorgänge können jeweils von der Steuereinrichtung 34 gespeichert werden.

Durch den Einsatz eines Beschleunigungssensors der Erfassungseinrichtung 33 im Werkzeug 30 ist die Lage des Werkzeugs 30 bzw. des Werkzeugelements 32 im Raum bekannt. Nur wenn die Position des Werkzeugs 30 bzw. des Werkzeugelements 32 in dem programmier- bzw. teachbaren Toleranzbereich T liegt, kann der Schraubvorgang gestartet werden. Der Toleranzbereich T kann um beispielsweise +/- 3° oder +2° und - 3° um die ideale Lage vorhanden sein. Die ideale Lage ist, wenn die Achse 321 des Werkzeugelements 32 und die Achse 42 der Schraube im Raum aufeinanderliegen also fluchten. Somit ist um die ideale Lage ein Toleranzbereich vorhanden, der einen unteren und oberen Schwellwert für die Möglichkeit des Startens des Schraubvorgangs hat.

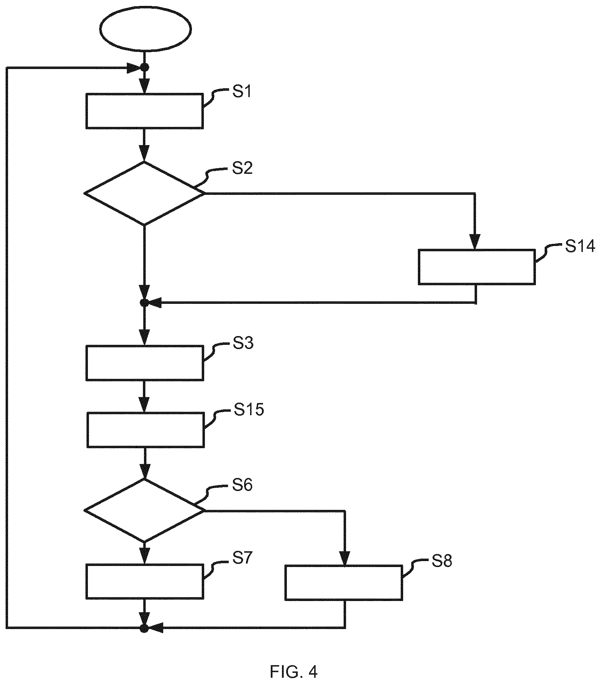

Somit kann mit dem Werkzeug 30, genauer gesagt seiner Steuereinrichtung 34 und der Erfassungseinrichtung 33 das in Fig. 4 veranschaulichte Verfahren ausgeführt werden. Das Verfahren ist in weiten Teilen ähnlich wie bei dem Verfahren gemäß Fig. 2. Daher werden nachfolgend vor allem die Unterschiede beschrieben.

Bei einem Schritt S1 wird mit der Erfassungseinrichtung 33 die Lage des Werkzeugs 30 im Raum erfasst. Danach geht der Fluss zu dem Schritt S2 weiter, bei welchem geprüft wird, ob das Werkzeug 30 in der idealen Lage, gegebenenfalls ergänzt um den vorbestimmten Toleranzbereich T, zur Behandlung des Werkstücks 3, 4 angeordnet ist oder nicht. Es wird somit geprüft, ob die Lage des Werkzeugs 30 einem vorbestimmten Wert entspricht. Ist das Werkzeug 30 in der idealen Lage, gegebenenfalls ergänzt um den vorbestimmten Toleranzbereich, angeordnet, geht der Fluss zu dem Schritt S3 weiter. Andernfalls geht der Fluss zu einem Schritt S14 weiter. Bei dem Schritt S3 kann mit dem Werkzeug 30 die Behandlung des Werkstücks 3 und/oder 4, also ein Schraubvorgang, gestartet werden. Danach geht der Fluss zu dem Schritt S15 weiter.

Demgegenüber wird bei dem Schritt S14 die Fehlstellung des Werkzeugelements 32 zu der Schraube mit der Steuereinrichtung 34 softwaretechnisch kompensiert, so dass eine Behandlung mit dem Werkzeug 30, also ein Schraubvorgang, gestartet werden kann. Somit geht der Fluss zu dem Schritt S3 weiter.

Bei dem Schritt S15 wird mit dem Werkzeug 30 die Behandlung des Werkstücks 3 und/oder 4 durchgeführt. Hierbei erfasst die Erfassungseinrichtung 33 das Drehmoment und die Anzugskraft der Verschraubung oder die bei der Behandlung des Werkstücks 3 und/oder 4 ausgeübten oder aufgetretenen Kraft/Kräfte. Danach geht der Fluss zu dem Schritt S6 weiter.

Bei dem Schritt S6 wird geprüft, ob die beim Schritt S15 erfassten Werte innerhalb der vorgegebenen Grenzen liegen oder nicht. Liegen die Werte innerhalb der vorgegebenen Grenzen, geht der Fluss zu einem Schritt S7 weiter, bei welchem die Behandlung des Werkstücks 3 und/oder 4 mit dem Werkzeug 30 als "Gut" bzw. "in Ordnung" bewertet wird. Das Ergebnis der Bewertung kann beispielsweise mit der Anzeigeeinrichtung 35 angezeigt werden.

Andernfalls, also wenn einer der Werte außerhalb der vorgegebenen Grenzen liegt, geht der Fluss zu einem Schritt S8 weiter, bei welchem die Behandlung des Werkstücks 3 und/oder 4 mit dem Werkzeug 30 als "Schlecht" bzw. "nicht in Ordnung" bewertet wird. Auch dieses Ergebnis der Bewertung kann beispielsweise mit der Anzeigeeinrichtung 35 angezeigt werden. Danach geht der Fluss zu dem Schritt S1 zurück.

Das Verfahren wird beendet, wenn das Werkzeug 30 ausgeschaltet wird.

Gemäß einer Modifikation des vorliegenden Ausführungsbeispiels ermöglicht die Erfassungseinrichtung 33 mit ihrem Beschleunigungssensor unzulässige Betriebszustände, z.B. Sturz des Werkzeugs 30, Schlag am Werkzeug 30, Missbrauch des Werkzeugs 30, usw., zu ermitteln. Die dabei ermittelten Daten können mit der Anzeigeeinrichtung 35 angezeigt werden. Zudem können mit der Anzeigeeinrichtung 35 entsprechende Warnungen oder Anweisungen, z.B. Wartung erforderlich, usw., angezeigt werden.

Gemäß einer weiteren Modifikation des vorliegenden Ausführungsbeispiels stellt eine Kombination aus Beschleunigungssensor und Gyrosensor nicht nur die Ermittlung der Lage des Werkzeugs 30 bzw. des Werkzeugelements 32 im Raum sondern auch die Position des Werkzeugs 30 bzw. des Werkzeugelements 32 im Raum bereit. In diesem Fall erhält das Werkzeug 30 bzw. das Werkzeugelement 32 durch Teachen eine Ausgangsposition und Lage im Raum, auf die es eingestellt werden kann. Dies kann auch durch Führen eines Benutzers des Werkzeugs über Ausrichtbefehle an der Anzeigeeinrichtung 35 erfolgen. Von der jeweiligen Position und Lage aus kann das Werkzeug 30 über ermittelte Beschleunigungs- und Drehwerte über der Zeit jederzeit seine neue Lage und Position ermitteln und dann später für eine Behandlung des Werkstücks 3 und/oder 4, also für einen Schraubvorgang, ausgerichtet werden. Bei dieser Ausgestaltung kann bei dem Werkzeug 30 dann nur in vorgegebenen Lagen und Positionen z.B. der Schraubvorgang freigegeben werden.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

In der Fertigungsanlage können auch mehr als ein Werkzeug 10 und/oder 30 zum Einsatz kommen.

Auch die Erfassungseinrichtung 233 bei dem ersten Ausführungsbeispiel und/oder seinen Modifikationen kann separat von der Steuereinrichtung 23 bereitgestellt sein. Als weitere Möglichkeit kann auch die Erfassungseinrichtung 33 bei dem zweiten Ausführungsbeispiel und seinen Modifikationen Teil der Steuereinrichtung 34 bereitgestellt sein.

Das Kommunikationsmodul 231 kann auch drahtlos kommunizieren.

Auch das Werkzeug 30 kann ein Kommunikationsmodul 231 aufweisen.

## Patentansprüche

1. Werkzeug (10; 30), mit
einem Werkzeugelement (22; 32) zur Behandlung eines Werkstücks (3; 4),
einer Erfassungseinrichtung (233; 33) zur Erfassung der Lage des Werkzeugs (10; 30) und/oder des Werkzeugelements (22; 32) im Raum relativ zu einer Oberfläche des Werkstücks (3; 4) und zu einer Achse (42) einer Schraube oder eines Niets (5), und
einer Steuereinrichtung (23; 34), die zur Auswertung des von der Erfassungseinrichtung (233; 33) erfassten Werts relativ zu der Oberfläche des Werkstücks (3; 4) und zu der Achse (42) der Schraube oder des Niets (5) ausgestaltet ist, und die zur Steuerung des Werkzeugs (10; 30) abhängig davon, ob das Ergebnis der Auswertung in einem vorbestimmten Toleranzbereich um einen vorbestimmten Wert liegt, ausgestaltet ist,
wobei die Steuereinrichtung (23; 34) ausgestaltet ist, den Start einer Behandlung des Werkstücks (3; 4) mit dem Werkzeugelement (22; 32) zu ermöglichen, wenn das Ergebnis der Auswertung in dem vorbestimmten Toleranzbereich liegt, und/oder wenn eine bekannte Fehlstellung des Werkzeugelements (22; 32) zu der Schraube oder dem Niet (5) vorliegt,
wobei die Steuereinrichtung (23; 34) ausgestaltet ist, zu prüfen, ob die Werte, die bei der Behandlung des Werkstücks (3; 4) mit dem Werkzeugelement (22; 32) von einem Wegesensor (19) des Werkzeugs (10; 30) und/oder einem Kraftsensor (20) des Werkzeugs (10; 30) erfasst wurden, innerhalb von vorgegebenen Grenzen liegen oder nicht, und
wobei die Steuereinrichtung (23; 34) ausgestaltet ist, die Behandlung des Werkstücks (3; 4) mit dem Werkzeugelement (22; 32) als "Gut" bzw. "in Ordnung" zu bewerten, wenn die von dem Wegesensor (19) und/oder dem Kraftsensor (20) erfassten Werte innerhalb der vorgegebenen Grenzen liegen, und die Behandlung des Werkstücks (3; 4) mit dem Werkzeugelement (22; 32) als "Schlecht" bzw. "nicht in Ordnung" zu bewerten, wenn einer der Werte außerhalb der vorgegebenen Grenzen liegt.

2. Werkzeug (10; 30) nach Anspruch 1, wobei die Erfassungseinrichtung (233; 33) zur Erfassung der Beschleunigung und/oder der Position des Werkzeugs (10; 30) und/oder des Werkzeugelements (22; 32) im Raum ausgestaltet ist.

3. Werkzeug (10; 30) nach einem der vorangehenden Ansprüche, wobei die Erfassungseinrichtung (233; 33) einen Beschleunigungssensor und/oder einen Gyrosensor aufweist.

4. Werkzeug (10; 30) nach einem der vorangehenden Ansprüche, zudem mit einer Anzeigeeinrichtung (232; 35) zur Anzeige der von der Erfassungseinrichtung (233; 33) erfassten Werte und/oder von Warnungen, wenn eine mit dem Werkzeugelement (22; 32) durchgeführte Behandlung eines Werkstücks (3; 4) nicht in Ordnung war.

5. Werkzeug (10; 30) nach einem der vorangehenden Ansprüche,
wobei im Werkzeug (10; 30) gespeicherte Werte zum Teachen des Werkzeugs (10; 30) zum Anfahren von mindestens einer vorbestimmten Position vorgesehen sind, und
wobei die Steuereinrichtung (23; 34) zur Steuerung des Werkzeugs (10; 30) derart ausgestaltet ist, dass das Werkzeug (10; 30) mindestens eine vorbestimmte Position zum Behandeln des Werkstücks (3; 4) anfährt.

6. Werkzeug (10; 30) nach einem der vorangehenden Ansprüche, wobei das Werkzeug (10; 30) ein Nietwerkzeug oder ein Schraubwerkzeug ist.

7. Fertigungsanlage (1) zur Fertigung von Gegenständen aus mindestens einem Werkstück (3; 4), mit mindestens einem Werkzeug (10; 30) nach einem der vorangehenden Ansprüche, wobei das Werkzeug (10; 30) zur Behandlung des Werkstücks (3; 4) zum Einsatz kommt.

8. Verfahren zur Behandlung eines Werkstücks (3; 4) mit einem Werkzeugelement (22; 32) eines Werkzeugs (10; 30), mit den Schritten
Erfassen, mit einer Erfassungseinrichtung (233; 33) des Werkzeugs (10; 30), der Lage des Werkzeugs (10; 30) und/oder des Werkzeugelements (22; 32) im Raum relativ zu einer Oberfläche des Werkstücks (3; 4) und zu einer Achse (42) einer Schraube oder eines Niets (5), und,
Auswerten, mit einer Steuereinrichtung (23; 34) des Werkzeugs (10; 30), des von der Erfassungseinrichtung (233; 33) erfassten Werts relativ zu der Oberfläche des Werkstücks (3; 4) und zu der Achse (42) der Schraube oder des Niets (5), und
Steuern, mit der Steuereinrichtung (23; 34) des Werkzeugs (10; 30), abhängig davon, ob das Ergebnis der Auswertung in einem vorbestimmten Toleranzbereich um einen vorbestimmten Wert liegt,
wobei die Steuereinrichtung (23; 34) den Start einer Behandlung des Werkstücks (3; 4) mit dem Werkzeugelement (22; 32) ermöglicht, wenn das Ergebnis der Auswertung in dem vorbestimmten Toleranzbereich liegt, und/oder wenn eine bekannte Fehlstellung des Werkzeugelements (22; 32) zu der Schraube (40) oder dem Niet (5) vorliegt,
wobei die Steuereinrichtung (23; 34) prüft, ob die Werte, die bei der Behandlung des Werkstücks (3; 4) mit dem Werkzeugelement (22; 32) von einem Wegesensor (19) des Werkzeugs (10; 30) und/oder einem Kraftsensor (20) des Werkzeugs (10; 30) erfasst wurden, innerhalb von vorgegebenen Grenzen liegen oder nicht, und
wobei die Steuereinrichtung (23; 34) die Behandlung des Werkstücks (3; 4) mit dem Werkzeugelement (22; 32) als "Gut" bzw. "in Ordnung" bewertet, wenn die von dem Wegesensor (19) und/oder dem Kraftsensor (20) erfassten Werte innerhalb der vorgegebenen Grenzen liegen, und die Behandlung des Werkstücks (3; 4) mit dem Werkzeugelement (22; 32) als "Schlecht" bzw. "nicht in Ordnung" bewertet, wenn einer der Werte außerhalb der vorgegebenen Grenzen liegt.

## Claims

1. Tool (10; 30) having
a tool element (22; 32) for treating a workpiece (3; 4),
a sensing device (233; 33) for sensing the position of the tool (10; 30) and/or of the tool element (22; 32) in space relative to a surface of the workpiece (3; 4) and to an axis (42) of a screw or of a rivet (5), and
a control device (23; 34) which is designed to evaluate the value, sensed by the sensing device (233; 33), relative to the surface of the workpiece (3; 4) and to the axis (42) of the screw or of the rivet (5), and which is designed to control the tool (10; 30) depending on whether the result of the evaluation lies in a predetermined tolerance range about a predetermined value,
wherein the control device (23; 34) is designed to allow the start of a treatment of the workpiece (3; 4) with the tool element (22; 32) when the result of the evaluation lies in the predetermined tolerance range, and/or in the event of a known misalignment of the tool element (22; 32) with respect to the screw or the rivet (5),
wherein the control device (23; 34) is designed to check whether the values that have been sensed by a position sensor (19) of the tool (10; 30) and/or a force sensor (20) of the tool (10; 30) during the treatment of the workpiece (3; 4) with the tool element (22; 32) lie within predefined limits or not, and
wherein the control device (23; 34) is designed to evaluate the treatment of the workpiece (3; 4) with the tool element (22; 32) as "good" or "okay" when the values sensed by the position sensor (19) and/or the force sensor (20) lie within the predefined limits, and to evaluate the treatment of the workpiece (3; 4) with the tool element (22; 32) as "poor" or "not okay" when one of the values does not lie within the predefined limits.

2. Tool (10; 30) according to Claim 1,
wherein the sensing device (233; 33) is designed to sense the acceleration and/or the position of the tool (10; 30) and/or of the tool element (22; 32) in space.

3. Tool (10; 30) according to either of the preceding claims,
wherein the sensing device (233; 33) has an acceleration sensor and/or a gyro sensor.

4. Tool (10; 30) according to one of the preceding claims, also having
a display device (232; 35) for displaying the values sensed by the sensing device (233; 33) and/or for displaying warnings when a treatment of a workpiece (3; 4) that is carried out with the tool element (22; 32) was not okay.

5. Tool (10; 30) according to one of the preceding claims,
wherein values stored in the tool (10; 30) for teaching the tool (10; 30) to move into at least one predetermined position are provided, and
wherein the control device (23; 34) is designed to control the tool (10; 30) such that the tool (10; 30) moves into at least one predetermined position for treating the workpiece (3; 4).

6. Tool (10; 30) according to one of the preceding claims, wherein the tool (10; 30) is a riveting tool or a screwdriving tool.

7. Production plant (1) for producing articles from at least one workpiece (3; 4), having
at least one tool (10; 30) according to one of the preceding claims, wherein the tool (10; 30) is used for treating the workpiece (3; 4).

8. Method for treating a workpiece (3; 4) with a tool element (22; 32) of a tool (10; 30), having the steps of
sensing, with a sensing device (233; 33) of the tool (10; 30), the position of the tool (10; 30) and/or of the tool element (22; 32) in space relative to a surface of the workpiece (3; 4) and to an axis (42) of a screw or of a rivet (5), and
evaluating, with a control device (23; 34) of the tool (10; 30), the value sensed by the sensing device (233; 33) relative to the surface of the workpiece (3; 4) and to the axis (42) of the screw or of the rivet (5), and
controlling, with the control device (23; 34) of the tool (10; 30), depending on whether the result of the evaluation lies in a predetermined tolerance range about a predetermined value,
wherein the control device (23; 34) allows the start of a treatment of the workpiece (3; 4) with the tool element (22; 32) when the result of the evaluation lies in the predetermined tolerance range and/or in the event of a known misalignment of the tool element (22; 32) with respect to the screw (40) or the rivet (5),
wherein the control device (23; 34) checks whether the values that were sensed by a position sensor (19) of the tool (10; 30) and/or a force sensor (20) of the tool (10; 30) during the treatment of the workpiece (3; 4) with the tool element (22; 32) lie within predefined limits or not, and
wherein the control device (23; 34) evaluates the treatment of the workpiece (3; 4) with the tool element (22; 32) as "good" or "okay" when the values sensed by the position sensor (19) and/or the force sensor (20) lie within the predefined limits, and the treatment of the workpiece (3; 4) with the tool element (22; 32) as "poor" or "not okay" when one of the values does not lie within the predefined limits.

## Revendications

1. Outil (10 ; 30), comprenant
un élément d'outil (22 ; 32) permettant de traiter une pièce à travailler (3 ; 4),
un dispositif d'acquisition (233 ; 33) permettant d'acquérir la position de l'outil (10 ; 30) et/ou de l'élément d'outil (22 ; 32) dans l'espace par rapport à une surface de la pièce à travailler (3 ; 4) et à un axe (42) d'une vis ou d'un rivet (5), et
un dispositif de commande (23 ; 34) qui est configuré pour évaluer la valeur acquise par le dispositif d'acquisition (233 ; 33) par rapport à la surface de la pièce à travailler (3 ; 4) et à l'axe (42) de la vis ou du rivet (5), et qui est configuré pour commander l'outil (10 ; 30) en fonction du fait que le résultat de l'évaluation se trouve dans une plage de tolérance prédéterminée autour d'une valeur prédéterminée,
le dispositif de commande (23 ; 34) étant configuré pour permettre le démarrage d'un traitement de la pièce à travailler (3 ; 4) avec l'élément d'outil (22 ; 32) si le résultat de l'évaluation se trouve dans la plage de tolérance prédéterminée et/ou s'il existe un mauvais alignement connu de l'élément d'outil (22 ; 32) par rapport à la vis ou au rivet (5),
le dispositif de commande (23 ; 34) étant configuré pour vérifier si les valeurs qui ont été acquises lors du traitement de la pièce à travailler (3 ; 4) avec l'élément d'outil (22 ; 32) par un capteur de déplacement (19) de l'outil (10 ; 30) et/ou un capteur de force (20) de l'outil (10 ; 30) se trouvent à l'intérieur de limites prédéfinies ou non, et
le dispositif de commande (23 ; 34) étant configuré pour évaluer le traitement de la pièce à travailler (3 ; 4) avec l'élément d'outil (22 ; 32) comme « bon » ou « correct » si les valeurs acquises par le capteur de déplacement (19) et/ou le capteur de force (20) se trouvent à l'intérieur des limites prédéfinies, et pour évaluer le traitement de la pièce (3 ; 4) avec l'élément d'outil (22 ; 32) comme « mauvais » ou « incorrect » si l'une des valeurs se trouve en dehors des limites prédéfinies.

2. Outil (10 ; 30) selon la revendication 1, dans lequel le dispositif d'acquisition (233 ; 33) est configuré pour acquérir l'accélération et/ou la position de l'outil (10 ; 30) et/ou de l'élément d'outil (22 ; 32) dans l'espace.

3. Outil (10 ; 30) selon l'une quelconque des revendications précédentes, dans lequel le dispositif d'acquisition (233 ; 33) présente un capteur d'accélération et/ou un capteur gyroscopique.

4. Outil (10 ; 30) selon l'une quelconque des revendications précédentes, comprenant en outre un dispositif d'affichage (232 ; 35) permettant d'afficher les valeurs acquises par le dispositif d'acquisition (233 ; 33) et/ou des avertissements si un traitement effectué avec l'élément d'outil (22 ; 32) d'une pièce à travailler (3 ; 4) était incorrect.

5. Outil (10 ; 30) selon l'une quelconque des revendications précédentes,
dans lequel des valeurs stockées dans l'outil (10 ; 30) sont prévues pour entraîner l'outil (10 ; 30) à aborder au moins une position prédéterminée, et
dans lequel le dispositif de commande (23 ; 34) permettant de commander l'outil (10 ; 30) est configuré de telle sorte que l'outil (10 ; 30) aborde au moins une position prédéterminée pour traiter la pièce à travailler (3 ; 4).

6. Outil (10 ; 30) selon l'une quelconque des revendications précédentes, dans lequel l'outil (10 ; 30) est un outil de rivetage ou un outil de vissage.

7. Installation de fabrication (1) destinée à la fabrication d'objets à partir d'au moins une pièce à travailler (3 ; 4), comprenant
au moins un outil (10 ; 30) selon l'une quelconque des revendications précédentes, l'outil (10 ; 30) étant mis en œuvre pour le traitement de la pièce à travailler (3 ; 4).

8. Procédé de traitement d'une pièce à travailler (3 ; 4) avec un élément d'outil (22 ; 32) d'un outil (10 ; 30), comprenant les étapes consistant à
acquérir, avec un dispositif d'acquisition (233 ; 33) de l'outil (10 ; 30), la position de l'outil (10 ; 30) et/ou de l'élément d'outil (22 ; 32) dans l'espace par rapport à une surface de la pièce à travailler (3 ; 4) et à un axe (42) d'une vis ou d'un rivet (5), et
évaluer, avec un dispositif de commande (23 ; 34) de l'outil (10 ; 30), la valeur acquise par le dispositif d'acquisition (233 ; 33) par rapport à la surface de la pièce (3 ; 4) et à l'axe (42) de la vis ou du rivet (5), et
commander l'outil (10 ; 30) avec le dispositif de commande (23 ; 34) en fonction du fait que le résultat de l'évaluation se trouve dans une plage de tolérance prédéterminée autour d'une valeur prédéterminée,
le dispositif de commande (23 ; 34) permettant le démarrage d'un traitement de la pièce à travailler (3 ; 4) avec l'élément d'outil (22 ; 32) si le résultat de l'évaluation se trouve dans la plage de tolérance prédéterminée, et/ou s'il existe un mauvais alignement connu de l'élément d'outil (22 ; 32) par rapport à la vis (40) ou au rivet (5),
le dispositif de commande (23 ; 34) vérifiant si les valeurs qui ont été acquises lors du traitement de la pièce à travailler (3 ; 4) avec l'élément d'outil (22 ; 32) par un capteur de déplacement (19) de l'outil (10 ; 30) et/ou un capteur de force (20) de l'outil (10 ; 30) se trouvent à l'intérieur de limites prédéfinies ou non, et
le dispositif de commande (23 ; 34) évaluant le traitement de la pièce à travailler (3 ; 4) avec l'élément d'outil (22 ; 32) comme « bon » ou « correct » si les valeurs acquises par le capteur de déplacement (19) et/ou le capteur de force (20) se trouvent à l'intérieur des limites prédéfinies, et évaluant le traitement de la pièce à travailler (3 ; 4) avec l'élément d'outil (22 ; 32) comme « mauvais » ou « incorrect » si l'une des valeurs se trouve en dehors des limites prédéfinies.
